# EUROPEAN PATENT APPLICATION

(11) **EP 2 903 337 A1**
(43) Date of publication of application: **05.08.2015**
(21) Application number: 14305112.6
(22) Date of filing: 29.01.2014
(51) Int. Cl.: H04W 36/00, H04W 48/20, H04W 84/04, H04W 88/12

(54) **Methods, apparatuses and computer program product for determining an offset for a cell selection procedure.**

(71) Applicant: ALCATEL LUCENT, 92100 Boulogne-Billancourt (FR)
(72) Inventor: Wong, Shin Horng, Swindon, Wiltshire SN5 7DJ (GB); Puddle, Nicola, Swindon, Wiltshire SN5 7DJ (GB); Brend, Graham, Swindon, Wiltshire SN5 7DJ (GB)
(74) Representative: Coghlan, Judith Elizabeth Kensy

(57) **Abstract**

Aspects and embodiments described provide wireless telecommunications network node methods, network nodes and computer program products operable to perform those methods. One aspect provides a wireless communication network node method comprising: assessing, at a network access node, that available resource at the network access node is insufficient to support operation of further user equipment in a cell range expansion region associated with a network-determined cell selection bias value; determining, at the network access node, a new cell selection bias value at which available resource at the network access node is sufficient to support operation of further user equipment in a new cell range expansion region; and providing a network control node with an indication of the new cell selection bias value. A computer program product and network access node operable to perform the method are provided. The first aspect recognises that within a network there are likely to be temporary changes to average or typical loading experienced at low power nodes or macros, such that the CIO value set according to a semi-static method may not, in the short term, support the required long term CIO value. The first aspect recognises that there may be a requirement within a network to cater for temporary or ephemeral changes to a substantially static CIO value set in relation to a particular network access node within a network.

## Description

### FIELD OF THE INVENTION

Aspects and embodiments described provide wireless telecommunications network node methods, network nodes and computer program products operable to perform those methods.

### BACKGROUND

Wireless telecommunication networks are known. In such networks, network connectible devices (for example, mobile telephones or tablets) are operable to communicate with base stations provided by network operators. In known wireless telecommunication networks, radio coverage is provided to network connectible devices in geographical areas typically known as cells. A base station is located in each cell to provide radio coverage. Network connectible devices in each cell are operable to receive information and data from the base station and to transmit data and information to the base station.

Network connectible devices roam through a wireless communications network. Base stations are provided which support areas of radio coverage as described above. A number of those base stations are provided and are distributed geographically in order to provide a wide area of coverage to network connectible devices.

When network connectible devices such as user equipment are within an area served by a base station, communications may be established between user equipment and a base station using associated radio links. Traditional base stations provide coverage in relatively large geographical areas and such base stations are often referred to as macro base stations and support macro cells of radio coverage. It is possible to provide a heterogeneous network (HetNet) where smaller sized cells are provided within macro cells. Such smaller sized cells can be referred to as micro cells, pico cells or femto cells. One way to establish a small cell is to provide a small cell base station or "low power node" (LPN) which is operable to provide radio coverage having relatively limited range within the coverage area of the macro cell. The transmission power of a low power node is relatively low and each low power node tends to support small cells which provide a small coverage area compared to that of a macro cell.

Small radio cells of coverage are typically provided where communications coverage provided by a macro cell is poor, where a user wishes to use an alternative communications link provided locally, and/or to increase capacity within a network.

Deployment of small cells in a wireless communication network can assist a network operator in relation to handling capacity in high traffic areas; for example, so-called hotspot areas. An ability to offload traffic to a small cell or cells located in a high traffic area of a network may be particularly useful to a network operator.

Although HetNet deployments may offer advantages, unexpected consequences of such deployments may occur. It is desired to provide techniques which may be used to address those consequences.

### SUMMARY

Accordingly, a first aspect provides: a wireless communication network node method comprising: assessing, at a network access node, that available resource at the network access node is insufficient to support operation of further user equipment in a cell range expansion region associated with a network-determined cell selection bias value; determining, at the network access node, a new cell selection bias value at which available resource at the network access node is sufficient to support operation of further user equipment in a new cell range expansion region; and providing a network control node with an indication of the new cell selection bias value.

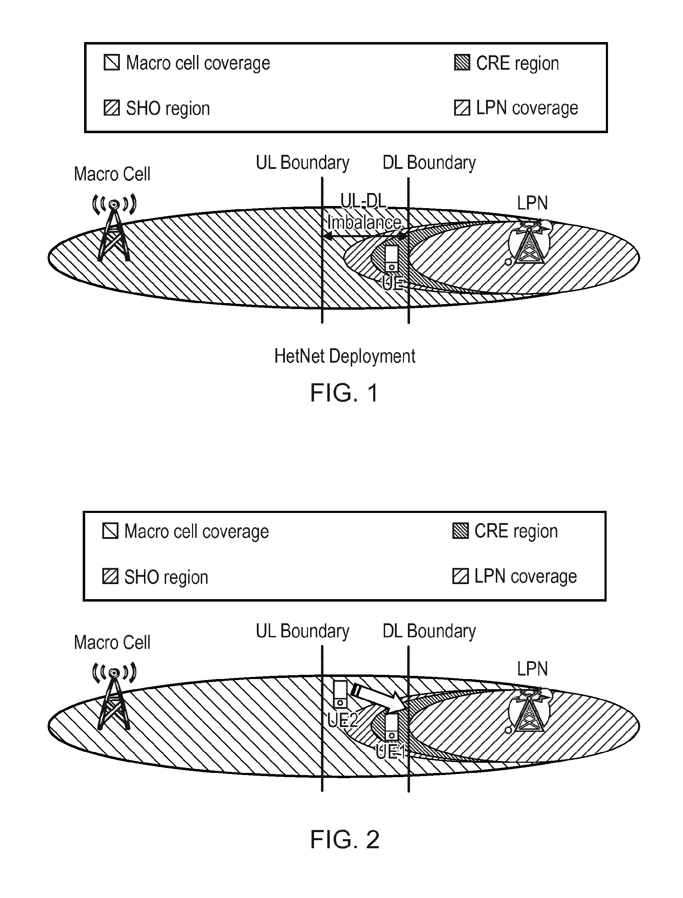

The first aspect recognises that in wireless communications network deployments, for example, a HetNet deployment, such as that illustrated in Figure 1 which shows a macro cell and a small cell, an uplink (UL) boundary occurs where user equipment uplink path loss to the macro base station and the small cell base station is essentially the same. A downlink (DL) boundary occurs where the received pilot power from a macro base station and the received pilot power from the small cell base station are substantially identical at user equipment. In a homogeneous network (ie, a macro cell only deployment or a small cell only deployment), the uplink and downlink boundaries tend to be substantially coincident and occur at approximately the same geographical location within the network. However, in a HetNet deployment a small cell base station typically has a lower transmit power than a macro cell base station. As a consequence, the uplink and downlink boundaries tend to differ, as shown in Figure 1. The region between the uplink and downlink boundaries is referred to as the uplink-downlink imbalance region. If user equipment is served by the macro cell base station and enters the uplink-downlink imbalance region as shown in Figure 1, that user equipment will typically create strong interference within the small cell supported by the small cell base station. Such a scenario is applicable in both LTE and UMTS radio access technologies. In UMTS, the strong uplink interference will occur unless the user equipment is operating in a soft handover mode within a soft handover region.

The first aspect recognises that cell range expansion (CRE) which can be implemented in a range of network deployments, can be of particular use in a HetNet deployment. Cell range expansion is a known technique in UMTS and LTE networks. Cell range expansion is a technique according to which handover of user equipment operating in, for example, a macro cell can be biased towards another network access node, for example, a low power node, by setting a bias, known as a cell individual offset (CIO) appropriately in relation to the low power node. According to such technique, user equipment operates to measure received signal strength from a low power node and then apply a cell selection bias, essentially making the received signal strength appear greater than it is in actuality. Such technique also acts to essentially broaden a region of coverage supported by a network access node without actively increasing the transmit power of that network access node, for example, low power node.

Although user equipment in the expanded or CRE region are likely to suffer from high interference from the macro if they perform an early handover to the low power node, it is possible that additional capacity offered by the low power node can lead to overall system throughput gain. Accordingly, using cell range expansion techniques to bias user equipment towards selection of low power nodes is a technique which can be successfully employed by many network operators.

It will be appreciated that there are both advantages and disadvantages associated with implementing cell range expansion within a network. The amount of biasing implemented may depend upon an average or typical traffic load experienced at the various network access nodes, for example, a low power node and a macro. As a result, a network implemented biasing method may typically be implemented, according to which the amount of bias to be applied by user equipment is set in a substantially-static manner by a network based upon the typical or average loading of a cell or system of cells of the network. Such semi-static semi-centralised biasing may perform better than a fixed uniform biasing method applied across all cells of a given cell type within a whole network.

The first aspect recognises that cell range expansion and the applicability of biasing techniques used in cell range expansion may suffer from some issues. It has been recognised that biasing could depend upon the load of each network access node, for example, low power node and each macro cell and, thus, some cell range expansion techniques are such that there can be provided a network implemented semi-static decentralised biasing method. According to such methods, a cell individual offset (CIO) value for each network access node or low power node is determined for a set of nodes of a network in a semi-static manner. Any changes to a cell individual offset using such methods are typically slow and gradual, aiming at converging to a set of stable, long term cell individual offset values across a network.

The first aspect recognises that within a network there are likely to be temporary changes to average or typical loading experienced at low power nodes or macros, such that the CIO value set according to a semi-static method may not, in the short term, support the required long term CIO value. The first aspect recognises that there may be a requirement within a network to cater for temporary or ephemeral changes to a substantially static CIO value set in relation to a particular network access node within a network.

Accordingly, the first aspect may provide: a wireless communication network node method which comprises: assessing, at a network access node, that available resource at the network access node is insufficient to support operation of further user equipment in a cell range expansion region associated with a network-determined cell selection bias value. The first aspect recognises that although a network control node is aware of user equipment numbers in each cell, and therefore may have a feel for simple load balancing between cells, the network access node itself is aware of the resource, for example, power, physical and other similar resource which might be available to users being supported in its cell(s), since it is responsible for scheduling decisions. The first aspect recognises that it is the network access node that may become aware of the difficulty it may have in relation to addition of further user equipment in the cell range expansion region.

The method may comprise: determining, at the network access node, a new cell selection bias value at which available resource at the network access node is sufficient to support operation of further user equipment in a new cell range expansion region. The network access node may be operable to calculate, given available resource, an approximate value for a cell selection bias to be applied by user equipment. That cell selection bias value may be chosen by a network access node to try and ensure that user equipment at the edge of the cell range expansion region, that is to say, the threshold value for user equipment requesting handover to the network access node as a result of the applied bias value, can be supported by available resource at the network access node.

The method may comprise: providing a network control node with an indication of the new cell selection bias value. Once calculated by a network access node, the network access node may be operable to provide the network control node with the new calculated value. The new cell selection bias value can be communicated to user equipment which are using the (semi-static) network-determined cell selection bias value as those user equipment report measurements based on the long-term cell selection bias value which might indicate handover to the network access node is desirable.

The provision of the new cell selection bias value may comprise a request to temporarily implement the new cell selection bias value before a return to the network-determined cell selection bias value. Accordingly, temporary dynamic changes to available resource at a network access node may be accommodated, whilst attempting to maintain general adherence to the network implemented preferred cell selection bias value.

The network-determined cell selection bias and/or new cell selection bias value may comprise a cell individual offset (CIO) value associated with a network access node.

According to one arrangement, a network access node may be operable to indicate a change in cell individual offset from a long term cell individual offset when it is determined at the network access node that as the network access node cannot support additional user equipment at, for example, the geometry (signal to noise and interference ratio) which corresponds to the long term CIO value.

According to one embodiment, the network-determined cell selection bias value is substantially static. Accordingly, the new cell selection bias value may be considered by the network control node to comprise a temporary change to the substantially static network -determined cell selection bias value. The network -determined cell selection bias value may comprise a default value to be implemented in relation to a given network access node and the new cell selection bias may be considered to be a short-term alteration to that default value.

According to one embodiment, the indication of the new cell selection bias value comprises a temporary change to the network-determined cell selection bias value. Accordingly, the indication of the new cell selection bias value may comprise an offset in relation to said network -determined cell selection bias value. In some embodiments, the indication of new cell selection bias value may comprise an absolute value.

According to one embodiment, the indication of the new cell selection bias value comprises an indication of a period for which the new cell selection value is to be applied. Accordingly, the indication may comprise a timer or indication of time period over which the new selection bias value is expected to be of relevance. That indication of time period may be a default, set by the network or set on commissioning of a system to be applied in relation to any received new cell selection bias value, or may, for example, comprise a time period indicated by the network access node reporting the new cell selection bias value.

According to one embodiment, the indication of the new cell selection bias value is provided in response to a request from a network control node to handover user equipment to the network access node in a cell range expansion region associated with the network-determined cell selection bias value. Accordingly, the network access node may only perform assessment and reporting of a new cell selection bias value when there is user equipment requesting handover to the network access node. Such an arrangement ensures that the most relevant conditions at the network access node are taken into account when assessing whether there is sufficient resource at the network access node to support that user equipment.

According to one embodiment, the step of assessing is performed periodically by the network access node. According to one embodiment, the indication of the new cell selection bias value is provided to the network control node when the network access node assesses that available resource at the network access node is insufficient to support operation of further user equipment in a cell range expansion region associated with a network-determined cell selection bias value. Accordingly, the network access node may be proactive, rather than reactive, in relation to identifying whether available resource might be insufficient to support additional user equipment in the cell range expansion region. A network control node may be informed as early as possible that a network access node may be unable to support more users and thus any requests to handover to that network access node may be rejected earlier in a handover process. Similarly, that user equipment may be informed of a new cell selection bias value as soon as it might be of relevance to a requested handover.

According to one embodiment, the step of determining the new cell selection bias value comprises determining a new cell selection bias value in dependence upon user equipment receiver capability. According to some arrangements, a network access node may be operable to indicate to the network control node that it is unable to accept the new user equipment and, furthermore, be operable to provide an alternative CIO value representative of user equipment which it may be able to support. Indicating a temporary change in the CIO value as part of the handover process may allow a network to target specific user equipment. For example, user equipment having a more advanced receiver or reception technologies may be supported with lower power resources and therefore may be allowed to handover to the target network access node at the long term CIO value, whereas user equipment having a less advanced receiver may be barred from handover.

According to one embodiment, the method comprises: assessing, at a network access node, that available resource at the network access node is sufficient to support operation of further user equipment in a cell range expansion region associated with the network-determined cell selection bias value; and providing the network control node with an indication to return to use of the network-determined cell selection bias value. Accordingly, a network access node may take active steps to keep a network control node informed of its ability to handle additional user equipment. If the network control node receives indication that a network access node can support user equipment at the network-determined cell selection bias value, it may return to that default value and perform future operation on the basis of that value, rather than the new cell selection bias value.

According to one embodiment, the network access node comprises a low power node in a heterogeneous wireless telecommunications network. It will be appreciated that methods in accordance with the first aspect may be of relevance to improve network operation in instances where there is an uplink-downlink imbalance region within a network, as is likely to occur in a heterogeneous network.

A second aspect provides a computer program product operable, when executed on a computer, to perform the method of the first aspect.

A third aspect provides a wireless communication network access node comprising: assessment logic operable to assess that available resource at the network access node is insufficient to support operation of further user equipment in a cell range expansion region associated with a network-determined cell selection bias value; determination logic operable to determine a new cell selection bias value at which available resource at the network access node is sufficient to support operation of further user equipment in a new cell range expansion region; and communication logic operable to provide a network control node with an indication of the new cell selection bias value.

According to one embodiment, the network-determined cell selection bias value is substantially static.

According to one embodiment, the indication of the new cell selection bias value comprises a temporary change to the network-determined cell selection bias value.

According to one embodiment, the indication of the new cell selection bias value comprises an indication of a period for which the new cell selection value is to be applied.

According to one embodiment, the communication logic is operable to provide the indication of the new cell selection bias value in response to a request from a network control node to handover user equipment to the network access node in a cell range expansion region associated with the network-determined cell selection bias value.

According to one embodiment, the assessment logic is operable to perform the step of assessing periodically.

According to one embodiment, the communication logic is operable to provide the indication of the new cell selection bias value to the network control node when the network access node assesses that available resource at the network access node is insufficient to support operation of further user equipment in a cell range expansion region associated with a network-determined cell selection bias value.

According to one embodiment, the determination logic is operable to determine the new cell selection bias value in dependence upon user equipment receiver capability.

According to one embodiment, the assessment logic is operable to assess whether available resource at the network access node is sufficient to support operation of further user equipment in a cell range expansion region associated with the network-determined cell selection bias value; and instruct the communication logic to provide the network control node with an indication to return to use of the network-determined cell selection bias value.

According to one embodiment, the network access node comprises a low power node in a heterogeneous wireless telecommunications network.

A fourth aspect provides a wireless communication network control node method comprising: associating, at a network control node, a network access node with a network-determined cell selection bias value; receiving, from said network access node, an indication that available resource at said network access node is insufficient to support operation of user equipment in a cell range expansion region associated with a network-determined cell selection bias value; receiving, from the network access node, the indication comprising a new cell selection bias value at which available resource at the network access node is sufficient to support operation of further user equipment in a new cell range expansion region; and associating, at the network control node, the network access node with the new cell selection bias value.

Accordingly, the fourth aspect recognises that whilst a network access node may be most aware of the availability of its resources, the operation of user equipment within a network may be controlled in dependence upon signalling between a network control node and user equipment. In particular, a handover process is typically overseen by a network control node in order to ensure minimal disruption to end user experience and thus provision of a network control node with relevant information determined by or at the network access node can help to smooth overall network operation.

According to the fourth aspect a method may comprise: associating, at a network control node, a network access node with a network-determined cell selection bias value such that user equipment request operation in a cell range expansion region supported by the network access node in dependence upon the network-determined cell selection bias value. User equipment may be informed of that network-determined cell selection bias value such that measurements made by user equipment may be interpreted and triggered events, such as handovers, which occur in relation to measurements made by user equipment are reported correctly.

According to the fourth aspect a method may comprise: receiving, from the network access node, an indication that available resource at said network access node is insufficient to support operation of user equipment in said cell range expansion region associated with a network-determined cell selection bias value; the indication comprising a new cell selection bias value at which available resource at the network access node is sufficient to support operation of further user equipment in a new cell range expansion region. Accordingly, the network control node may be informed of a change to default operation by a network access node. The indication of a change may itself include an indication of a change requested or suggested to a default cell selection bias value by a network access node.

According to the fourth aspect a method may comprise: associating, at the network control node, the network access node with the new cell selection bias value. Accordingly, the new cell selection bias value may be stored in relation to the relevant network access node.

In one embodiment, the method comprises: commencing, on receipt of the indication of new cell selection value, a timer over which the new cell selection bias value is to be applied. In one embodiment, the method comprises: determining from the indication of new cell selection value, a period over which the new cell selection value is to be applied. Accordingly, in some embodiments, a timer T_{CIORNC} can be configured at a network control node. The value of that timer may be provided to the network control node by a network access node when that network access node informs the network control node of a temporary change in the cell selection bias value. During the time that T_{CIORNC} is running at the network control node, the control node is operable to prevent initiation of a handover if it receives a report from user equipment of a handover event, based on the long term (network determined) cell selection bias value that user equipment have for the appropriate target network access node. During the duration of the timer T_{CIORNC} the network control node may be operable to instead update user equipment reporting a handover event with the new cell selection bias value associated with that network access node. On expiry of T_{CIORNC}, the network control node may be operable to revert to implementation of the network-determined cell selection bias value.

In one embodiment, the method comprises: informing user equipment requesting handover to the network access node of the new cell selection bias value.

In one embodiment, the method comprises: informing user equipment requesting handover to the network access node of the new cell selection bias value and a period over which the new cell selection bias value is to be applied by the user equipment in relation to the network access node. According to some arrangements, an appropriate timer, for example T_{CIO}, can be configured at user equipment when the network changes its cell selection bias value from that of the network-determined value to that of a new value indicated to the network by a network access node. Prior to the expiry of T_{CIO}, user equipment who are aware of that timer may be operable to use the new value. Upon expiry of T_{CIO}, user equipment may revert back to the network-determined cell selection bias value indicated to all user equipment by a network control node. Such an arrangement recognises that the change in network access node cell selection bias can be temporary and that the network access node is likely to revert back to a long term cell selection bias value over a relatively short term. Use of such a timer may avoid the need for a network to provide further signalling to user equipment instructing reversion back to a long term cell selection bias value in relation to a network access node.

In one embodiment, the method comprises: receiving an indication from the network access node that available resource at the network access node is sufficient to support operation of user equipment in the cell range expansion region associated with a network-determined cell selection bias value and returning to use of the network-determined cell selection bias value in relation to the network access node. Accordingly, a network control node may be operable to return to normal operation when the network access node informs the control node that it is able to support user equipment in a cell range expansion region in accordance with the network-determined cell selection bias value.

In one embodiment, the network access node comprises a low power node in a heterogeneous wireless telecommunications network.

A fifth aspect provides a computer program product operable, when executed on a computer, to perform the method of the fourth aspect.

A sixth aspect provides a wireless communication network control node comprising: association logic operable to associate a network access node with a network-determined cell selection bias value; reception logic operable to receive, from the network access node, an indication that available resource at the network access node is insufficient to support operation of user equipment in a cell range expansion region associated with a network-determined cell selection bias value together with an indication of a new cell selection bias value at which available resource at the network access node is sufficient to support operation of further user equipment in a new cell range expansion region; and update logic operable to associate the network access node with the new cell selection bias value.

In one embodiment, the network control node is operable to commence, on receipt of the indication of new cell selection value, a timer over which the new cell selection bias value is to be applied.

In one embodiment, the network control node is operable to determine from the indication of new cell selection value, a period over which the new cell selection value is to be applied.

In one embodiment, the network control node is operable to inform user equipment requesting handover to the network access node of the new cell selection bias value.

In one embodiment, the network control node is operable to inform user equipment requesting handover to the network access node of the new cell selection bias value and a period over which the new cell selection bias value is to be applied by the user equipment in relation to the network access node.

In one embodiment, the network control node is operable to receive an indication from the network access node that available resource at the network access node is sufficient to support operation of user equipment in the cell range expansion region associated with a network-determined cell selection bias value and returning to use of the network-determined cell selection bias value in relation to the network access node.

In one embodiment, the network access node comprises a low power node in a heterogeneous wireless telecommunications network.

In one embodiment, the network control node comprises an RNC or MME in a heterogeneous wireless telecommunications network.

Further particular and preferred aspects are set out in the accompanying independent and dependent claims. Features of the dependent claims may be combined with features of the independent claims as appropriate, and in combinations other than those explicitly set out in the claims. Similarly, features and embodiments described in relation to one aspect may be combined with other aspects as appropriate, and in combinations other than those explicitly set out above.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates user equipment in a cell range expansion region of a HetNet;
Figure 2 illustrates schematically user equipment operating in a cell range expansion region according to one embodiment;
Figure 3 is a signalling diagram illustrating schematically a method according to one arrangement;
Figure 4 illustrates schematically user equipment operating in a cell range expansion region according to one embodiment; and
Figure 5 is a signalling diagram illustrating schematically a method according to one arrangement.

### DESCRIPTION OF THE EMBODIMENTS

### Overview

Before discussing the embodiments in any more detail, first an overview will be provided.

Arrangements may enable a low power node or other cell within a network to indicate a temporary cell individual offset (CIO) value to a network control node; for example, an RNC, if it is determined at such a low power node or cell that the long term semi-static CIO value is unsuitable for operating conditions being experienced at the low power node or cell of interest. Such a change in CIO value can be assessed at the low power node or cell of interest because typically it is the cell which has full visibility of the scheduling of its power resources and other resources including physical resource; for example, OVSF codes. That information may be invisible to an RNC or other network control node, even when load information in terms of user numbers may be available to the RNC. A cell may be operable to inform a network control node of a preferred cell individual offset value. When informed of such a preferred temporary CIO value, a network control node may be operable to update the CIO value associated with that cell and, in due course, that CIO value maybe communicated to appropriate user equipment operating in relevant adjacent cells.

In some arrangements, a temporary CIO value can be signalled to a network control node by a cell or network access node as part of a handover rejection procedure for a user equipment which is attempting a handover from one cell to that cell or network access node. According to such a scenario, user equipment may trigger an event 1D to indicate a preference for handover towards a network access node based on a long term CIO value associated with that network access node. On reporting an event 1D, a network control node, for example, an RNC, may be operable to prepare the target network access node, for example, low power node, for the handover process. If the target network access node is unable to handle user equipment having a poor geometry, for example due to limited power resources, according to some arrangements that network access node may be operable to indicate to the network control node that it is unable to accept the new user equipment and, furthermore, be operable to provide an alternative CIO value representative of user equipment which it may be able to support. Indicating a temporary change in the CIO value as part of the handover process may allow a network to target specific user equipment. For example, user equipment having a more advanced receiver or reception technologies may be supported with lower power resources and therefore may be allowed to handover to the target network access node at the long term CIO value, whereas user equipment having a less advanced receiver may be barred from handover.

According to some arrangements, a network control node, for example, RNC, may be operable to indicate user equipment receiver capability and/ or long term CIO value which caused user equipment to trigger an event 1D to the target network access node. According to such an arrangement, it may be feasible that user equipment may try to hand over to the target network access node even at the new CIO value. Such an arrangement may give a target network access node more information and, thus, decisions made at the network access node may be more appropriate regarding whether to accept or reject such a handover. A network control node may be operable to subsequently update a CIO value associated with the network access node in relation to the user equipment which initially triggered the handover process, such that the user equipment may trigger an appropriate event 1D handover request at the lower temporary CIO value.

According to one arrangement, a network access node may be operable to indicate a change in cell individual offset from a long term cell individual offset when it is determined at the network access node that as the network access node cannot support additional user equipment at, for example, the geometry (signal to noise and interference ratio) which corresponds to the long term CIO value. The network access node may be operable to indicate whether the change in CIO targets user equipment having a particular receiver type or other operational feature. Such an arrangement may allow a network control node to prevent a handover of user equipment to that network access node based on the long term CIO value. Such an arrangement, namely one in which a network access node warns a network control node as soon as it has reached a trigger operational threshold, may be such that it reduces handover related signalling between the network control node and network access node in comparison to an arrangement in which that communication only occurs when a user attempts to hand over to a target network access node. However, that compromise in relation to handover related signalling may occur at the expense of less dynamic control of the CIO value associated with a network access node because the change to the CIO value is sent in advance and may relate to network or radio conditions at the network access node which are historical and not most relevant to current operation of a network.

If a network control node is aware that a network access node has an updated temporary CIO value, a network control node may be operable to use the CIO value provided by a network access node and update the CIO value for that network access node for user equipment which are reporting a trigger event; for example, an event 1D. That is to say, according to such an arrangement, user equipment reporting a trigger event will not lead to a handover procedure, as would typically be the case, but instead leads to an update at the user equipment by a network control node, of the CIO value to be applied by that user equipment in relation to the target network access node. Allowing a network control node to update the CIO value for a network access node in relation to user equipment reporting that they have reached a handover trigger criteria reduces signalling overhead. The network access node may, according to some arrangements, revert back to a long term CIO value once its resources allow it to support user equipment at that long term CIO value. The network access node may report that return to the long term CIO value to the network control node, such that appropriate changes may also be made at the network control node.

In one arrangement, a network access node may be operable to signal to a network control node that reverting back to the long term CIO value is appropriate. That signalling may occur when the network access node is operable to support additional user equipment at the geometry (SNIR) corresponding to the long term CIO value.

According to some arrangements, an appropriate timer, for example T_{CIO}, can be configured at user equipment when the network changes its CIO value from that of the long term CIO value to that of a temporary CIO value indicated to the network by a network access node. Prior to the expiry of T_{CIO}, user equipment who are aware of that timer may be operable to use the temporary CIO. Upon expiry of T_{CIO}, user equipment may revert back to the long term CIO indicated to all user equipment by a network control node. Such an arrangement recognises that the change in network access node CIO can be temporary and that the network access node is likely to revert back to a long term CIO value over a relatively short term. Use of such a timer may avoid the need for a network to provide further signalling to user equipment instructing reversion back to a long term CIO value in relation to a network access node.

According to some embodiments, a timer T_{CIORNC} can be configured at a network control node. The value of that timer may be provided to the network control node by a network access node when that network access node informs the network control node of a temporary change in the CIO value. During the time that T_{CIORNC} is running at the network control node, the RNC is operable to prevent initiation of a handover if it receives a report from user equipment of a 1D event, based on the long term CIO value that user equipment have in relation to the appropriate target network access node. During the duration of the timer T_{CIORNC} the network control node may be operable to instead update user equipment reporting a 1D event with the temporary CIO value associated with that network access node. On expiry of T_{CIORNC}, the network control node may be operable to revert to implementation of a previous or long term CIO value.

### Specific Example 1

Figure 2 illustrates schematically a HetNet deployment in which user equipment (UE1) has been handed over to a low power node (LPN) based upon a long term CIO bias value applied by the network of 5 dB. Since UE1 is operating within the cell range expansion region associated with the low power node, it suffers from high interference from the macro cell. To compensate for that high interference, the low power node operates such that it transmits control channels at a higher power in order to ensure their reliability. Such a scenario consumes higher than normal power resource from the low power node.

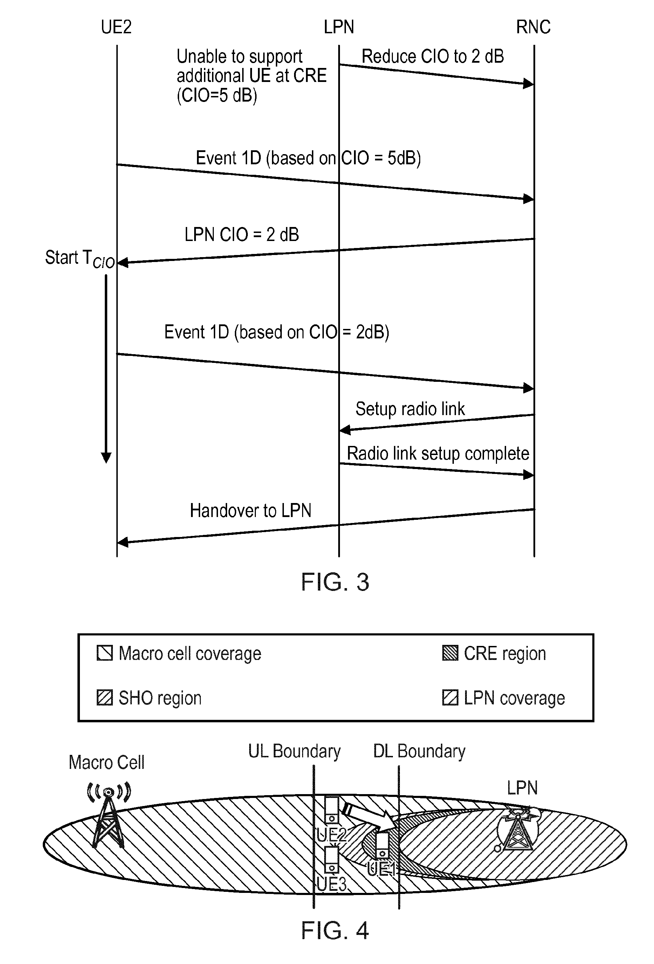

Figure 3 is a signalling diagram illustrating schematically the following events: Based on the power resource required to support UE1 within the cell range expansion region, the low power node determines that it is unable to support any further such user equipment. It also determines that it can support user equipment having a better geometry; for example, if the CIO value were 2 dB within the cell range expansion region. In the example illustrated in Figures 2 and 3, the low power node is operable to send appropriate signalling to an RNC. That signalling informs the RNC that the low power node would like to reduce the CIO value associated with itself temporarily to 2 dB. It will be appreciated that a low power node may indicate an offset to a long term CIO value, rather than an absolute CIO value to the RNC.

In the event that UE2 moves towards the low power node and triggers an event 1D based on a long term CIO value, the following steps may occur. Since the 1D event trigger is based on the long term CIO value associated with the LPN of 5 dB, the RNC does not execute a handover process but, instead, is operable to send a message to UE2 which reduces the CIO value associated with the LPN to 2 dB. The RNC also indicates that UE2 should start a timer T_{CIO}.

UE2 moves further into the LPN coverage region. As a result, UE2 is able to meet an event 1D trigger within the CRE region which corresponds to a cell individual offset value of 2 dB. Since T_{CIO} has not expired, UE2 is operable to trigger an event 1D based on the temporary CIO of 2 dB. The RNC is operable to recognise that the trigger from UE2 is based upon the temporary CIO requested by the LPN and therefore prepares the LPN for handover before proceeding to signal to UE2, thereby enabling a handover to the LPN.

### Example 2

Figure 4 illustrates schematically a HetNet deployment in which UE1 has handed over to a low power node, LPN, based on a long term CIO bias associated with the LPN of 5 dB. Since UE1 is operating in the CRE region it suffers from high interference from the macro cell and to compensate for this the low power node is operable to transmit control channels at a higher power than is usual, in order to ensure their reliability. Such operation consumes a higher than normal power resource at the LPN in relation to UE1.

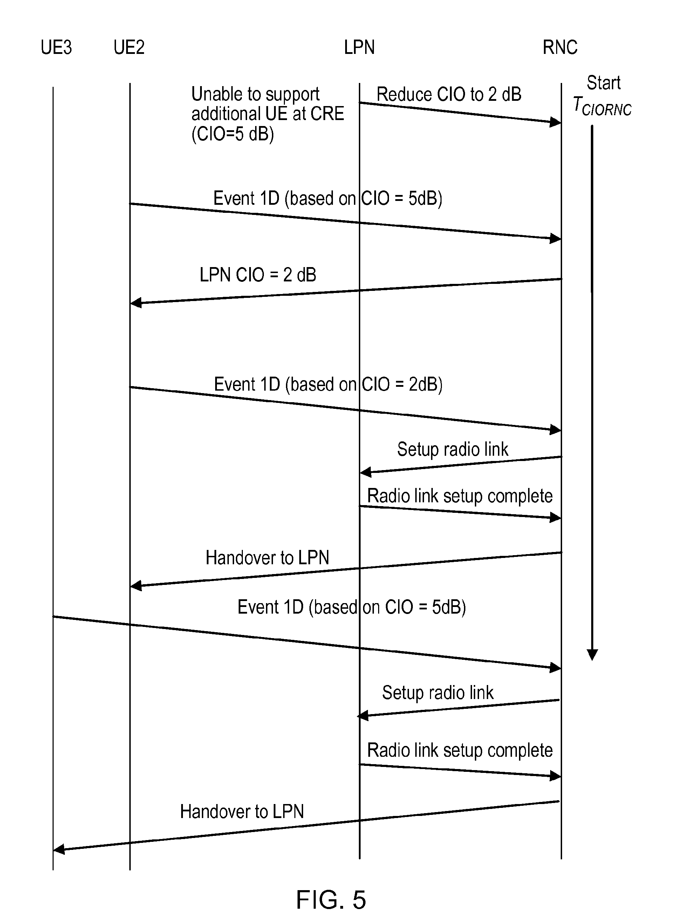

Figure 5 is a signalling diagram describing the following events: based on the power resource required to support UE1 within the CRE region, the LPN determines that it cannot support further such user equipment, but that it may be operable to support further user equipment having a better geometry within the CRE region; for example, if a cell range expansion region were implemented in which user equipment had a 2 dB cell individual offset. In the illustrated example, the LPN is operable to signal to an RNC that it would prefer that its CIO value be reduced temporarily to 2 dB. Again, it will be appreciated that the LPN may indicate an offset to a long term CIO value, rather than an absolute CIO value. In the example illustrated in Figures 4 and 5, the RNC is configured with T_{CIORNC}, the value of which is provided by an LPN when it signals to an RNC a new temporary CIO value. Accordingly, in the example shown, when the temporary value is signalled along with a timer value by the LPN, the RNC is operable to start such a timer.

As shown in Figure 4, UE2 may move towards the LPN. UE2 may trigger an event 1D based on the long term CIO value. Since the trigger is based on the long term CIO of 5 dB and, in the example illustrated, T_{CIORNC} is running at the RNC, the RNC does not operate to execute the handover process but, instead, sends a message to UE2 to reduce the CIO value associated with the LPN at user equipment UE2 to 2 dB.

If UE2 moves further into the LPN coverage region and meets the trigger value corresponding to a CIO of 2 dB associated with the LPN it then triggers an event 1D based on the temporary CIO. In this example, the RNC recognises that the trigger from UE2 is based on the temporary CIO value and prepares the LPN for handover. Subsequently, the RNC proceeds to signal to UE2 to allow handover to the LPN.

At some point later T_{CIORNC} expires, as the RNC reverts to implementing the long term CIO value of 5 dB. As a result, when UE3 moves towards the LPN and triggers an event 1D based on the long term value of 5 dB, the RNC is operable to initiate the handover process to the LPN because T_{CIORNC} has expired and the temporary updated CIO value is no longer appropriate.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless communication network node method comprising:
assessing, at a network access node, that available resource at said network access node is insufficient to support operation of further user equipment in a cell range expansion region associated with a network-determined cell selection bias value;
determining, at said network access node, a new cell selection bias value at which available resource at said network access node is sufficient to support operation of further user equipment in a new cell range expansion region; and
providing a network control node with an indication of said new cell selection bias value.

2. A method according to claim 1, wherein said indication of said new cell selection bias value comprises an indication of a period for which said new cell selection value is to be applied.

3. A method according to any preceding claim, wherein said indication of said new cell selection bias value is provided in response to a request from a network control node to handover user equipment to said network access node in a cell range expansion region associated with said network-determined cell selection bias value.

4. A method according to any preceding claim, wherein said indication of said new cell selection bias value is provided to said network control node when said network access node assesses that available resource at said network access node is insufficient to support operation of further user equipment in a cell range expansion region associated with a network-determined cell selection bias value.

5. A method according to any preceding claim, wherein said step of determining said new cell selection bias value comprises determining a new cell selection bias value in dependence upon user equipment receiver capability.

6. A method according to any preceding claim, wherein said network access node comprises a low power node in a heterogeneous communication network.

7. A wireless communication network access node comprising:
assessment logic operable to assess that available resource at said network access node is insufficient to support operation of further user equipment in a cell range expansion region associated with a network-determined cell selection bias value;
determination logic operable to determine a new cell selection bias value at which available resource at said network access node is sufficient to support operation of further user equipment in a new cell range expansion region; and
communication logic operable to provide a network control node with an indication of said new cell selection bias value.

8. A wireless communication network control node method comprising:
associating, at a network control node, a network access node with a network-determined cell selection bias value;
receiving, from said network access node, an indication that available resource at said network access node is insufficient to support operation of user equipment in a cell range expansion region associated with a network-determined cell selection bias value;
receiving, from said network access node, said indication comprising a new cell selection bias value at which available resource at said network access node is sufficient to support operation of further user equipment in a new cell range expansion region; and
associating, at said network control node, said network access node with said new cell selection bias value.

9. A method according to claim 8, comprising: commencing, on receipt of said indication of new cell selection value, a timer over which said new cell selection bias value is to be applied.

10. A method according to claim 8 or claim 9, comprising: determining from said indication of new cell selection value, a period over which said new cell selection value is to be applied.

11. A method according to any one of claims 8 to 10, comprising: informing user equipment requesting handover to said network access node of said new cell selection bias value.

12. A method according to any one of claims 8 to 11, comprising: informing user equipment requesting handover to said network access node of said new cell selection bias value and a period over which said new cell selection bias value is to be applied by said user equipment in relation to said network access node.

13. A method according to any one of claims 8 to 12, receiving an indication from said network access node that available resource at said network access node is sufficient to support operation of user equipment in said cell range expansion region associated with a network-determined cell selection bias value and returning to use of said network-determined cell selection bias value in relation to said network access node.

14. A computer program product operable, when executed on a computer, to perform the method of any one of claims 1 to 6 or 8 to 13

15. A wireless communication network control node comprising:
association logic operable to associate a network access node with a network-determined cell selection bias value;
reception logic operable to receive, from said network access node, an indication that available resource at said network access node is insufficient to support operation of user equipment in a cell range expansion region associated with a network-determined cell selection bias value together with an indication of a new cell selection bias value at which available resource at said network access node is sufficient to support operation of further user equipment in a new cell range expansion region; and
update logic operable to associate said network access node with said new cell selection bias value.
